(19) **Europäisches Patentamt**
**European Patent Office**
**Office européen des brevets**

(11) **EP 4 649 481 B1**

(12) **EUROPEAN PATENT SPECIFICATION**

(45) Date of publication and mention
of the grant of the patent:
**22.04.2026 Bulletin 2026/17**

(21) Application number: **24700173.8**

(22) Date of filing: **02.01.2024**

(51) International Patent Classification (IPC):
*G10L 25/48* (2013.01)    *G10L 25/30* (2013.01)
*G10L 25/87* (2013.01)    *G10L 17/02* (2013.01)
*G10L 21/0272* (2013.01)    *G10L 15/04* (2013.01)
*G10L 15/22* (2006.01)

(52) Cooperative Patent Classification (CPC):
**G10L 15/04; G10L 17/02; G10L 21/0272;**
**G10L 25/30; G10L 25/48; G10L 25/87;**
G10L 2015/227

(86) International application number:
**PCT/EP2024/050003**

(87) International publication number:
**WO 2024/149627 (18.07.2024 Gazette 2024/29)**

(54) **SPEECH PROCESSING OF AUDIO SIGNAL**

SPRACHVERARBEITUNG EINES AUDIOSIGNALS

TRAITEMENT DE LA PAROLE D'UN SIGNAL AUDIO

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **13.01.2023 EP 23151485**

(43) Date of publication of application:
**19.11.2025 Bulletin 2025/47**

(73) Proprietor: **Koninklijke Philips N.V.**
**5656 AG Eindhoven (NL)**

(72) Inventor: **HÄRMÄ, Aki Sakari**
**5656 AG Eindhoven (NL)**

(74) Representative: **Philips Intellectual Property &**
**Standards**
**High Tech Campus 52**
**5656 AG Eindhoven (NL)**

(56) References cited:
• FUKUDA TAKASHI ET AL: "Breath-detection-based telephony speech phrasing", 1 January 2011 (2011-01-01), ISCA, pages 2625 - 2628, XP093045251, Retrieved from the Internet <URL:https://www.isca-speech.org/archive_v0/archive_papers/interspeech_2011/i11_2625.pdf> DOI: 10.21437/Interspeech.2011-671
• MOSTAANI ZOHREH ET AL: "On The Relationship Between Speech-Based Breathing Signal Prediction Evaluation Measures and Breathing Parameters Estimation", ICASSP 2021 - 2021 IEEE INTERNATIONAL CONFERENCE ON ACOUSTICS, SPEECH AND SIGNAL PROCESSING (ICASSP), IEEE, 6 June 2021 (2021-06-06), pages 1345 - 1349, XP033955659, DOI: 10.1109/ICASSP39728.2021.9414756

**Description**

FIELD OF THE INVENTION

The invention relates to performing speech processing of an audio signal, and in particular, but not exclusively, to automatic speech recognition or speech enhancement processing for an audio signal capturing a speaker.

BACKGROUND OF THE INVENTION

Speech processing of audio signals is widely applied in a large variety of practical applications, and is becoming of increasing importance and significance for many everyday activities and devices.

For example, speech enhancement may be widely applied to provide improved clarity and reproducibility for speech being captured by audio signals such as e.g. sounds captured in a real life environment. Speech encoding is also frequently performed from captured audio. For example, speech encoding of captured audio signals is an integral part of smart phones. Another speech processing application that has become increasingly frequent in recent years is that of speech recognition to e.g. provide a user interface to a device.

For example, the speech interface of a personal assistant or home speaker makes it possible to control media, navigate features, track tracking, obtain various information services etc. simply by using a voice interface and while carrying out other activities, such as e.g. during exercising.

Speech interfaces based on Automatic Speech Recognition, ASR, are also becoming very important in controlling various devices such as wearable, nearable, and IoT consumer, health, and fitness devices. Speech is the most natural interface to interface with devices during activities which involves significant user movement and variation. As an example, US20090098981A1 discloses a fitness device with speech interface used for the communicating of the user with a virtual fitness coach. Fukuda et al: "Breath-detection-based telephony speech phrasing", Proc. Interspeech 2011, pages 2625-2628, discloses detecting breath events using acoustic information of an audio signal comprising speech, and performing ASR based on the breath events. Mostaani et al: "On The Relationship Between Speech-Based Breathing Signal Prediction Evaluation Measures and Breathing Parameters Estimation", Proc. IEEE ICASSP 2021, pages 1345-1349, discloses neural network-based predicting a breathing signal from a speech signal.

However, whereas a lot of effort has been invested in developing and optimizing speech processing algorithms for various applications, and many highly advantageous and efficient approaches have been developed, they tend to not be optimal in all circumstances. For example, many speech processing operations have been developed for specific nominal conditions, such as nominal speaker properties, nominal acoustic environments, etc. Many speech processing applications may not provide optimum performance in scenarios where the actual conditions differ from the expected nominal conditions. A number of speech processing algorithms may also be more complex or resource demanding than desired. Adapting the speech processing to try to compensate for varying properties tend to result in a less flexible, more complex, and /or more resource demanding implementations which often do not either provide optimal performance.

Hence, an improved approach for speech processing would be advantageous. In particular an approach allowing increased flexibility, improved adaptability, an improved performance, increased quality of e.g. speech enhancement, encoding, and/or recognition, reduced complexity and/or resource usage, improved remote control of audio processing, improved adaptation to variations in speaker properties and/or activities, reduced computational load, an improved user experience, facilitated implementation and/or an improved spatial audio experience would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus for speech processing of an audio signal, as set forth in appended independent claim 1, the apparatus comprising: an input arranged to receive the audio signal, the audio signal comprising a speech audio component for a speaker; a determiner arranged to generate a breathing waveform signal, the breathing waveform signal representing a lung air volume of the speaker as a function of time, the breathing waveform signal being independent of a level of the audio signal and representing a measure of a temporal respiratory pattern of the speaker throughout a breathing cycle; a segmenter arranged to segment the audio signal to generate speech segments of the audio signal, the segmentation being in response to the breathing waveform signal; and a speech processing circuit arranged to perform a speech processing of the audio signal, the speech processing being a segment based processing applied to the speech segments.

The approach may provide improved speech processing in many embodiments and scenarios. For many signals and scenarios, the approach may provide speech processing that more closely reflects variations in the properties and characteristics of the speech of the speaker. For example, it may adapt to a level of exhaustion or e.g. dyspnea of the speaker. The approach may provide facilitated adaptation and may in particular provide improved adapted speech processing. The approach may provide an efficient implementation and may in many embodiments allow a reduced complexity and/or resource usage.

The adaptation of the segmentation based on the breathing waveform signal may in particular allow a closer correlation and adaptation of the speech processing to the actual current speech of the speaker. The adaptation of the segmentation based on the breathing waveform signal may typically allow a closer correlation to sentence structures, words, etc. It may for example in some cases provide a higher probability that segmentation aligns with cognitive content of the speech and the speakers particular speaking pattern.

The segment based processing may be a sequential processing where the speech segments are processed sequentially. The segment based processing may perform processing where an output speech signal segment for a time interval of the audio signal is generated based on a speech segment of the audio signal for that time interval. In some embodiments, the speech processing for a speech segment may be based on no other part of the audio signal than the speech segment. In some embodiments, the speech processing of a speech segment includes no other samples of the audio signal than those belonging to the speech segment.

The approach may for example use the audio signal and/or a dedicated sensor input to sense the temporal respiratory pattern of the speaker (or multiple speakers). The temporal respiratory pattern is represented by the breathing waveform signal. Segmentation of the speech is performed according to breathing events such as inhaling or spoken and voiceless breathing. The approach then processes speech in the segments determined by the breathing events. The breathing waveform signal is a measure of a temporal respiratory pattern of the speaker (throughout a breathing cycle). The breathing waveform signal represents a lung air volume of the speaker as a function of time throughout the breathing cycle.

The breathing waveform signal is independent of a level of the audio signal. In many embodiments, the breathing waveform signal may be independent of the audio signal.

According to an optional feature of the invention, the determiner is arranged to determine the breathing waveform signal from the audio signal

The approach may provide facilitated adaptation and may in particular provide improved adapted speech processing without relying on or needing other inputs from other devices that measure properties of the speaker. The approach may provide an efficient implementation and may in many embodiments allow a reduced complexity and/or resource usage.

According to an optional feature of the invention, the determiner comprises: a trained artificial neural network having input nodes for receiving samples of the audio signal and output nodes arranged to provide samples of the breathing waveform signal.

This may provide particularly advantageous operation and performance in many scenarios and applications.

The approach may provide a particularly advantageous arrangement which may in many embodiments and scenarios allow a facilitated and/or improved possibility of utilizing artificial neural networks in adapting and optimizing speech processing, including typically speech enhancement and/or recognition.

The artificial neural network is a trained artificial neural network.

The artificial neural network may be a trained artificial neural network trained by training data including training speech audio signals and training breathing waveform signals generated from measurements of a breathing waveform; the training employing a cost function comparing the training breathing waveform signals to breathing waveform signals generated by the artificial neural network for the training speech audio signals. The artificial neural network may be a trained artificial neural network(s) trained by training data including training speech audio signals representing a range of relevant speakers in a range of different states and performing different activities.

The artificial neural network may be a trained artificial neural network trained by training data having training input data comprising training speech audio signals, and using a cost function including a contribution indicative of a difference between measured training breathing waveform signals and breathing waveform signal generated by the artificial neural network in response to the training speech audio signals.

According to an optional feature of the invention, the determiner is arranged to detect local extrema of the breathing waveform signal and to determine the speech segments in response to the local extrema.

According to an optional feature of the invention, the determiner is arranged to detect local maxima of the breathing waveform signal and to determine the speech segments in response to the local maxima.

This may provide a particularly advantageous speech segmentation. It may in many embodiments allow an improved speech segmentation closely adapting to the speech behavior of the speaker and/or to the content of speech as reflected in the sentence structure etc.

In many embodiments, the determine may be arranged to determine a start time of speech segments in response to a timing of the local maxima, and specifically to determine a start time of a speech segment as one with a fixed time offset to a time of the local maxima (the offset may be zero). According to an optional feature of the invention, the determiner is arranged to detect local minima for the breathing waveform signal and to determine the speech segments in response to the local minima.

This may provide a particularly advantageous speech segmentation. It may in many embodiments allow an improved speech segmentation closely adapting to the speech behavior of the speaker and/or to the content of speech as reflected in the sentence structure etc.

In many embodiments, the determine may be arranged to determine an end time of speech segments in response to a timing of the local minima, and specifically to determine an end time of a speech segment as one with a fixed time offset to a time of the local minima (the offset may be zero or often negative)

According to an optional feature of the invention, the determiner is arranged to determine at least one speech segments as a segment of the audio signal between a time of a local maximum of the breathing waveform signal and a time of a (following) local minimum of the breathing waveform signal. This may provide a particularly advantageous speech segmentation. It may in many embodiments allow an improved speech segmentation closely adapting to the speech behavior of the speaker and/or to the content of speech as reflected in the sentence structure etc.

The determiner may specifically be arranged to determine the start time of a speech segment as the time of a local maximum and the end time of the speech segment as the time of the following local minimum.

According to an optional feature of the invention, the segmenter is arranged to divide the audio signal into the speech segments and non-speech segments.

According to an optional feature of the invention, the segmenter is arranged to determine breathing time intervals and inspiration time intervals from the breathing waveform signal; and to determine the speech segments as segments of the audio signals during breathing time intervals and non-speech segments as segments of the audio signal during the inspiration time intervals.

According to an optional feature of the invention, the speech processing circuit is arranged to select speech segments as comprising speech from the speaker rather than from another speaker, the selection being in dependence on the breathing waveform signal.

The approach may allow a speech segmentation that reflects the current active speaker in a scenario with multiple potential speakers. The approach may allow improved speech segmentation and resulting improved speech processing.

According to an optional feature of the invention, the apparatus further comprises a sensor input arranged to receive a chest sensor signal, and the determiner is arranged to determine the breathing waveform signal from the chest sensor signal.

This may allow improved and/or facilitated operation in many embodiments and scenarios. It may often allow improved speech segmentation and resulting speech processing.

According to an optional feature of the invention, the apparatus further comprises a video input arranged to receive a video signal comprising video images of the speaker, and the determiner is arranged to determine the breathing waveform signal from the video images.

This may allow improved and/or facilitated operation in many embodiments and scenarios. It may often allow improved speech segmentation and resulting speech processing.

According to an optional feature of the invention, the speech processing comprises a speech enhancement processing.

The approach may provide improved speech enhancement and may in many scenarios allow an improved speech signal to be generated.

According to an optional feature of the invention, the speech processing comprises a speech recognition processing.

The approach may provide improved speech recognition. It may in many scenarios allow a more accurate detection of words, terms, and sentence, and may in particular allow improved speech recognition for speakers in a variety of situations, states, and activities.

According to an aspect of the invention, there is provided a method, as set forth in appended independent claim 14, the method comprising: receiving an audio signal comprising a speech audio component for a speaker; generating a breathing waveform signal, the breathing waveform signal representing a lung air volume of the speaker as a function of time, the breathing waveform signal being independent of a level of the audio signal and representing a measure of a temporal respiratory pattern of the speaker throughout a breathing cycle; segmenting the audio signal to generate speech segments of the audio signal, the segmentation being in response to the breathing waveform signal; and performing a speech processing of the audio signal, the speech processing being a segment based processing applied to the speech segments.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates some elements of an example of an audio apparatus in accordance with some embodiments of the invention;

FIG. 2 illustrates an example of a structure of an artificial neural network;

FIG. 3 illustrates an example of a node of an artificial neural network;

FIG. 4 illustrates some elements of an example of a training setup for an artificial neural network;

FIG. 5 illustrates an example of a breathing waveform signal; and

FIG. 6 illustrates some elements of a possible arrangement of a processor for implementing elements of an apparatus in accordance with some embodiments of the invention.

DETAILED DESCRIPTION OF SOME EMBODIMENTS OF THE INVENTION

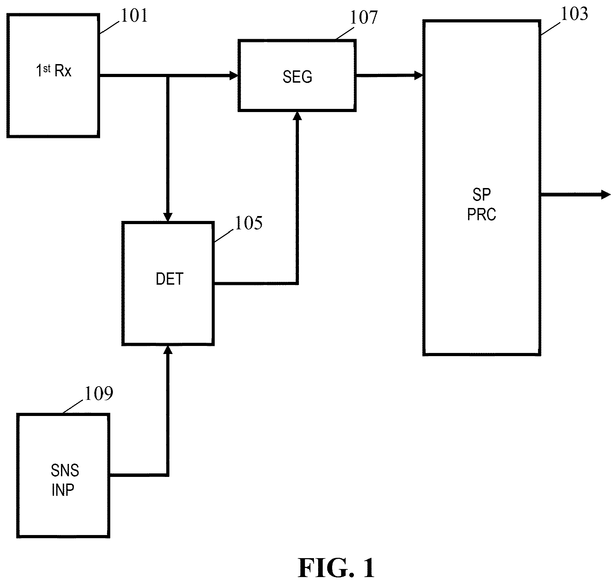

FIG. 1 illustrates some elements of a speech processing apparatus in accordance with some embodiments of the invention. The speech processing apparatus may be suitable for providing improved speech processing for speakers in many different environments and scenarios.

The speech processing apparatus comprises a receiver 101 which is arranged to receive an audio signal that comprises a speech audio component. The audio signal may specifically be a microphone signal representing audio captured by a microphone. The audio signal may specifically be a speech signal, and may in many embodiments be a speech signal captured by a microphone arranged to capture the speech of a single person, such as a microphone of a headset, a smartphone, or a body worn microphone. Thus, the audio signal will include a speech audio component (which also henceforth will be referred to as a speech signal) as well as possibly other sounds, such as background sounds from the environment.

The speech processing apparatus further comprises a speech processing circuit 103 which is arranged to apply a speech processing to the received audio signal, and thus specifically to the speech audio component of the audio signal. The speech processing may specifically be a speech enhancement processing, a speech encoding, or a speech recognition process.

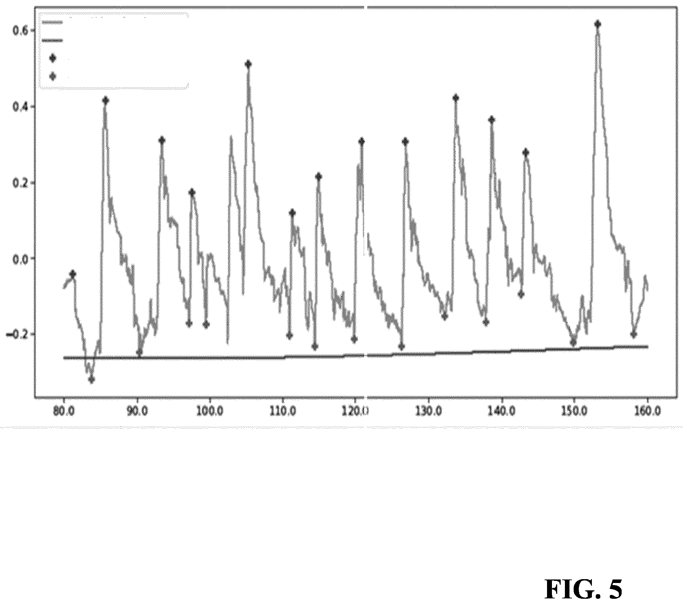

Speech processing is in many practical applications performed in segments where an audio signal is divided into segments and with each segment being processed by itself. In some applications, the audio/ speech signal is fixedly divided into consecutive segments that are then processed individually. For example, in many applications, a speech processing algorithm may be based on dividing the input audio signal into periodic time intervals of a fixed duration and processing these individually. However, in the speech processing apparatus of FIG. 5, the speech processing is not performed in predetermined and fixed segments/ time intervals but rather is based on a segmentation of the audio signal. In particular, the speech processing apparatus comprises a determiner 105 which is arranged to determine a breathing waveform signal which is indicative of a lung air volume of the speaker as a function of time, and a segmenter 107 which is arranged to segment the audio signal to generate speech segments of the audio signal in response to the breathing waveform signal. The speech processing circuit 103 is then arranged to process the audio signal based on a segment based processing applied to the speech segments generated by the segmenter 107.

The breathing waveform signal according to the claimed inventioin represents a lung air volume of the speaker as a function of time, is independent of a level of the audio signal, and represents a measure of a temporal respiratory pattern of the speaker throughout a breathing cycle It thus reflects the breathing of the speaker and the flow of air into and out of the lungs of the speaker. The breathing waveform signal is thus a time varying signal that reflects variations of the breathing of the speaker, specifically changes in lung volume resulting from the speaker breathing during and throughout a breathing cycle. The breathing waveform signal may in some embodiments represent the current lung volume. In other embodiments, the breathing waveform signal may for example represent a change in the current lung volume, such as for example when the breathing waveform signal represents a flow of air being inhaled/ exhaled. In many embodiments, the speech processing apparatus may comprise a sensor input 109 which is arranged to receive a sensor signal from which the breathing waveform signal is determined.

The sensor signal may specifically be a chest sensor signal, such as a signal from a chest sensor that is part of a chest belt which is worn around the chest/ body area of a person. Such a sensor may directly generate a sensor signal that reflects the circumference of the chest, or which may directly reflect more local chest expansions and contractions. Such a sensor signal may directly reflect the time variations of the air lung volume and may in many embodiments be used directly as a breathing waveform signal. In many embodiments, some low pass filtering, noise suppression, amplification may be applied to the input sensor signal to generate the breathing waveform signal.

The sensor signal may specifically be from e.g. a respiratory belt sensor, or from other sensors that sense the movement of the chest or abdomen of the speaker (or each speaker). The respiratory sensor can also be integrated in other devices such as a safety belt in a car.

In some embodiments, the sensor signal may not directly reflect chest contractions and expansions but may e.g. be from an optical sensor such as a video camera. The sensor signal may for example be a video signal from a camera capturing the speaker. The determiner 105 may be arranged to analyze the video images to determine chest movements of the speaker and therefrom determine a breathing waveform signal reflecting the chest expansions/ contractions, and thus the lung volume variations, of the speaker. It will be appreciated that various approaches for evaluating images to determine lung volume variations are known and for brevity will not be described further herein. For example, a US9301710B2 discloses a method to estimate the respiratory rate of a subject based on changes in the illumination patterns in a video signal showing the subject's thoracic region.

As another example, the sensor signal may be from a thermal or flow-based sensor that monitors the airflow through mouth and nose.

In many embodiments, the determiner/ determination circuit 105 may specifically be arranged to generate the breathing waveform signal at least partly from the audio signal. The determiner 105 may be arranged to process the audio signal in order to extract information indicative of the breathing of the speaker captured by the audio signal. The determiner 105 may be arranged to receive samples of the audio input signal and produce a time series or parameters representing a time series of lung air volume measurements/ estimates.

The following description will focus on an approach where the determiner may determine a breathing waveform signal even if no specific sensor data is available by deriving the breathing waveform signal from captured audio signal and specifically from speech data/ component thereof. As a low complexity example, the determiner may use speech activity detection (SAD) algorithms to segment the speech data into speech and non-speech segments. Based on the knowledge that inhaling takes place during speech pauses, the determiner 105 could use the durations and frequency of pauses as a proxy for the breathing behavior and thus determine the breathing waveform signal accordingly. In many embodiments, more accurate determination may be used including using artificial neural networks. This may for example compensate or take into account that there are more pauses in speech than true inspiration events which could lead to errors, for example, in estimates of the respiratory rate.

In many embodiments, the determiner 105 may comprise a trained artificial network which is arranged to determine samples of the breathing waveform signal based on samples of the audio signal. The artificial neural network may comprise input nodes that receive samples of the audio signal and output nodes that generate samples of the breathing waveform signal. The artificial neural network may for example have been trained using speech data and sensor data representing of lung air volume measurements during speech.

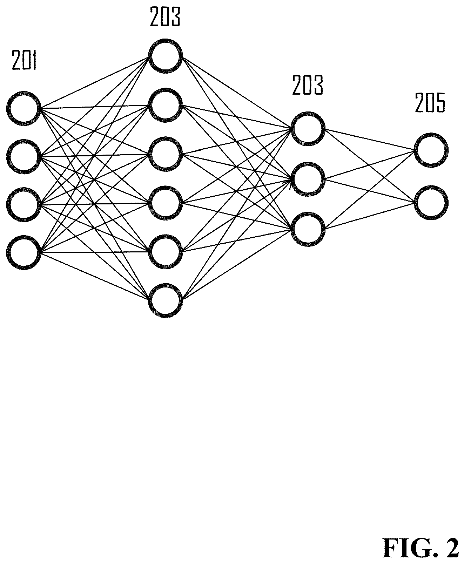

An artificial neural network as used in the described functions may be a network of nodes arranged in layers and with each node holding a node value. FIG. 2 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provides a significant effect in the learning and adaptation process of the neural network. Thus, the node value is generated as a function of the node values of the previous layer.

The artificial neural network may specifically comprise an input layer 201 comprising a plurality of nodes receiving the input data values for the artificial neural network. Thus, the node values for nodes of the input layer may typically directly be the input data values to the artificial neural network and thus may not be calculated from other node values.

The artificial neural network may further comprise none, one, or more hidden layers 203 or processing layers. For each of such layers, the node values are typically generated as a function of the node values of the nodes of the previous layer, and specifically a weighted combination and added bias followed by an activation function (such as a sigmoid, ReLU, or Tanh function may be applied).

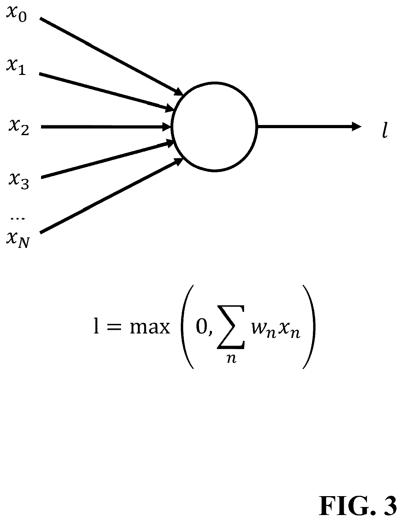

Specifically, as shown in FIG. 3, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_n w_n x_n$$

where w refers to weights, x refers to the nodes of the previous layer and n is an index referring to the different nodes of the previous layer.

An activation function may then by applied to the resulting combination. For example, the node value 1 may be determined as:

$$l = f(k)$$

where the function may for example be a Rectified Linear Unit function as described in Xavier Glorot, Antoine Bordes, Yoshua Bengio Proceedings of the Fourteenth International Conference on Artificial Intelligence and Statistics, PMLR 15:315-323, 2011):

$$f(k) = ReLU(k) = \max(0, k)$$

Other often used functions include a sigmoid function or a tanh function. In many embodiments, the node output or value may be calculated using a plurality of functions. For example, both a ReLU and Sigmoid function may be combined using an activation function such as:

$$f(k) = ReLU(k) + \sigma(k)$$

Such operations may be performed by each node of the artificial neural network (except for typically the input nodes).

The artificial neural network further comprises an output layer 205 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural network have been developed and in many embodiments the artificial neural network may be based on adapting and customizing such a network. An example of a network architecture that may be suitable for the applications mentioned above are Long short-term memory (LSTM)[ by Sepp Hochsreiter which is described in Hochreiter, Sepp, and Jürgen Schmidhuber. "Long short-term memory." Neural computation 9.8 (1997): 1735-1780.

LSTM are an architecture used for classification and regression of time domain signals using recurrent causal or bidirectional evaluation, and has been successfully applied to audio signals. For

$$f_t = \sigma_g\big(W_f * x_t + U_f * h_{t-1} + V_f \circ c_{t-1} + b_f\big)$$

where * denotes matrix multiplication, o denotes an Hadamard product, x is the input vector, $h_{t-1}$ denotes the output vector of the previous time step, W, V, U are the network wights, while b is a bias vector.

In theory, classic (or "vanilla") artificial neural networks can keep track of arbitrary long-term dependencies in the input sequences. The problem with vanilla artificial neural networks is computational (or practical) in nature: when training a vanilla artificial neural network using back-propagation, the long-term gradients which are back-propagated can "vanish" (that is, they can tend to zero) or "explode" (that is, they can tend to infinity), because of the computations involved in the process, which use finite-precision numbers. artificial neural networks using LSTM units partially solve the vanishing gradient problem, because LSTM units allow gradients to also flow unchanged. However, LSTM networks can still suffer from the exploding gradient problem.

An artificial neural network may in some cases further be arranged to include additional contributions that allow the artificial neural network to be dynamically adapted or customized for a specific desired property or characteristics of the generated output. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node.

The above description relates to a neural network approach that may be suitable for many embodiments and implementations. However, it will be appreciated that many other types and structures of neural network may be used. Indeed, many different approaches for generating a neural network have been, and are being, developed including neural networks using complex structures and processes that differ from the ones described above. The approach is not limited to any specific neural network approach and any suitable approach may be used without detracting from the invention.

Artificial neural networks are adapted to specific purposes by a training process which is used to adapt/ tune/ modify the weights and other parameters (e.g. bias) of the artificial neural network. It will be appreciated that many different training processes and algorithms are known for training artificial neural networks. Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost function often represents the distance between the prediction and the ground truth for a particular input data. Based on the cost function, the weights may be changed and by reiterating the process for the modified weights, the artificial neural network may be adapted towards a state for which the cost function is minimized.

In more detail, during a training step the neural network may have two different flows of information from input to output (forward pass) and from output to input (backward pass). In the forward pass, the data is processed by the neural network as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number of pairs of a captured audio signals and measured breathing waveform signals. The measured breathing waveform signal may be generated from a sensor signal of a sensor arranged to measure a property dependent on the lung air volume. The training of the artificial neural network may thus be performed using a training set comprising linked audio/ speech data/ signals and sensor data/ signals representing of lung air volume measurements during the speech.

In some embodiments, training data may be audio signals in time segments corresponding to the processing time intervals of the artificial neural networks being trained, e.g. the number of samples in a training audio signal may correspond to a number of samples corresponding to the input nodes of the artificial neural network(s) being trained. Each training example may thus correspond to one operation of the artificial neural network(s) being trained. Usually, however, a batch of training samples is considered for each step to speed up the training process. Furthermore, many upgrades to gradient descent are possible also to speed up convergence or avoid local minima in the cost function landscape.

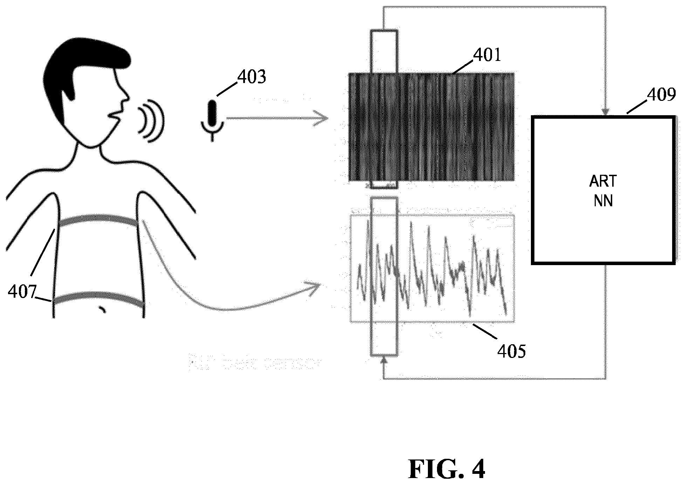

FIG. 4 illustrates an example of how training data may be generated by dedicated tests. A speech audio signal 401 may be captured by a microphone 403 during a time interval in which a person is speaking. The resulting captured audio signal may be fed to the artificial neural network 405 as input data (suitable processing such as amplification, digitization, filtering may be performed prior to generating the test audio signal being fed to the artificial neural network. Further, a breathing waveform signal 407 is determined as a sensor signal from a suitable lung volume sensor 409 that is e.g. positioned on the user. For example, the sensor 409 may be a respiratory inductive plethysmography (rip) sensor or a nasal canula flow rate sensor.

A large number of such measurements may be made to generate a large number of pairs of training audio signals and breathing waveform signal. These signals may then be applied and used to train the artificial neural network with a cost function being determined as the difference between the breathing waveform signal generated by the artificial neural network for the training audio signal and the measured training breathing waveform signal. The artificial neural network may then be adapted based on such a cost function as known in the art. For example, a cost value for each training audio signal and/or for the combined set of training downmix audio signals (e.g. an average cost value for the training sets is determined) may be determined. Typically, the cost function will include at least one component that reflects how close a generated signal is to a reference signal, i.e. a so-called reconstruction error. In some embodiments, the cost function will include at least one component that reflects how close a generated signal is to a reference signal from a perceptual point of view. The reference signal may in the example of FIG. 4 specifically be the measured breathing waveform signal.

The segmenter may on the basis of the breathing waveform signal determine speech segments of the audio signal. An example of a breathing waveform signal is illustrated in FIG. 5.

As illustrated in FIG. 5, the breathing waveform signal will typically have a periodic component reflecting the chest expansion and contraction caused by the breathing of the speaker. The repetition rate, durations between peaks or troughs etc. will vary and reflect that breathing is not perfectly periodic. The Inventors have realized that the breathing of a speaker impacts the speaking and that not only may it be possible to determine time varying properties resulting from the breathing from the captured audio but that time varying properties can be used to adapt the segmentation of speech for speech processing of the same audio signal to provide improved performance, and in particular performance that may better adapt to different scenarios and user behavior.

The specific segmentation approach that is used to generate speech segments may be different in different embodiments and applications.

In some embodiments, the segmenter 107 may be arranged to perform a signal analysis of the breathing waveform signal to extract properties of a periodic component of the signal. It will be appreciated that different algorithms for extracting periodic components from signals are known and that any suitable algorithm may be used. Based on the analysis, periodic properties such as a frequency/ repetition rate, a timing of the periodic component etc. may be determined. In some embodiments, these properties may be used to generate the speech segments. For example, speech segments may be generated as time intervals of a given percentage of a full period (say 90 %) following a maximum of the periodic component of the breathing waveform signal. Typically, a maximum of the breathing waveform signal corresponds to a maximum chest expansion and air volume, and thus correspond to the time of switching from a breathing in interval (inspiration) interval to a breathing out (expiration) interval.

The speech segments may thus be determined to correspond to a time period most likely to correspond to a time of speaking. The time interval may be set to large proportion of the time period to reflect that speech/ expiration intervals are typically substantially longer than non-speech inspiration time intervals. The approach may further provide a reliable estimate for situations where the speakers breathing is very rhythmic and constant. It may allow speech segments to be generated which has the same duration and includes the same number of samples. This may in many embodiments facilitate operation and implementation and may for example allow a fixed segment/ block processing to be implemented. For example, the same number may be processed for each sequential processing.

In many embodiments, the determiner is arranged to detect local maxima of the breathing waveform signal and to determine the speech segments in response to a timing of the local extrema, and often the determiner 105 is arranged to determine a start time and/ or and end time of speech segments in response to a timing of one or more of the local extrema. The local extrema may often be local minima, local maxima, or both local minima and maxima.

In many embodiments, the determiner 105 may be arranged to determine the timing of the local extrema. For example, the determiner 105 may be arranged to determine the time instants of the peaks of a breathing waveform signal, such as the peaks of the breathing waveform signal of FIG. 5. In some, embodiments, the determined timings may be fitted to a periodic component. For example, the timings may be determined such that a minimum square error between the periodic timing instants and the measured time instants of the minimal peaks is minimized. The periodic time instants may then be used to generate the speech segments resulting in periodic time intervals/ speech segments.

In many embodiments, the segmenter 107 may be arranged to generate segments of different duration/ length/ size. Specifically, the segmenter 107 may be arranged to determine the speech segments to reflect dynamic changes in the breathing rhythm and changes in the durations of inspiration and expiration time intervals. In particular, in some embodiments, each speech segment may be determined based on the local properties of the breathing waveform signal rather than on average properties over a larger number of repetitions of the periodic component of the breathing waveform signal.

In many embodiments, the timing of one speech segment is based on the timing of one local maximum, the timing of one local minimum, and or on the basis of one pair of a local maximum and an adjacent local minimum.

For example, in some embodiments, the determiner 105 may be arranged to detect local maximum. When a local maximum is detected, a speech segment may be determined as the audio signal in a time interval following the time instant of the local maximum. In many embodiments, the determiner 105 may be arranged to determine a start time for a speech segment in response to, and often as, a time of a local maximum of the breathing waveform signal.

An expiration time interval may typically follow the maximum lung volume corresponding to a peak in the breathing waveform signal. Accordingly, determining a time interval for a speech segment to follow a maximum in the breathing waveform signal will tend to result in speech segments being generated for expiration time intervals. The approach may provide a suitable determination of time intervals for speech segments in which the speaker is active.

In some embodiments, the determiner 105 may additionally or alternatively be arranged to detect local minima. When a local minimum is detected, a speech segment may be determined as the audio signal in a time interval preceding the time instant of the local minimum. In many embodiments, the determiner 105 may be arranged to determine an end time for a speech segment in response to, and often as, a time of a local minimum of the breathing waveform signal.

An expiration time interval may typically precede the minimum lung volume corresponding to a minimum in the breathing waveform signal. Accordingly, determining a time interval for a speech segment to precede a minimum in the breathing waveform signal will tend to result in speech segments being generated for expiration time intervals. The approach may provide a suitable determination of time intervals for speech segments in which the speaker is active.

The duration of the time interval may in some cases be a predetermined duration or may be dynamically determined based on e.g. different parameters. For example, in some cases, the duration of the time interval may be dependent on the available computational resource. For example, when there are no computational resource restrictions (e.g. due to not many other processes currently being active), the time interval may be set to be long whereas if the computational resource is currently restricted (e.g. due to other complex processes currently being active), the time intervals may be reduced in length. Thus, the time intervals, and the length of the speech segments, may in some embodiments vary dependent on different parameters. In the specific example, this may affect how large a proportion of the speech signal is actually being processed by the speech processing. This may of course not be suitable for some processes but may be acceptable in others. For example, for speech recognition, acceptable performance may be possible based on only recognizing the beginning of sentences which may typically align with the start of an expiration interval, and thus often with a maximum. Therefore, speech recognition may for some applications be acceptable even when only performed for some time at the start of expiration time intervals and improved for longer time intervals, and the audio apparatus may be arranged to adapt the duration that is considered, and thus the quality of the speech recognition, based on the available computational resource.

In some embodiments, the duration of the time intervals may be dependent on the breathing waveform signal. For example, an average period time for the periodic component of the breathing waveform signal may be determined and the duration of the time intervals for the speech segments may be set as a given percentage of the period duration. In other embodiments, the duration of the time intervals may be dynamically varying and may be different for consecutive speech segments.

In many embodiments, a speech segment may be determined as a segment of the audio signal between a time of a local maximum of the breathing waveform signal and a time of a local minimum of the breathing waveform signal. The start time of a time segment may be determined as the time of a local maximum and the end time of a time segment may be determined as a time of the following local minimum. The time interval may thus be the interval from a local maximum to a local minimum.

The maximum of the breathing waveform signal typically corresponds to a current maximum lung capacity and to the start of an expiration interval and the minimum of the breathing waveform signal typically corresponds to a current minimum lung capacity and to the start of an inspiration time interval and to the end of the expiration time interval.

The approach accordingly may provide an efficient approach for determining breathing/ expiration time intervals and inspiration time intervals from the breathing waveform signal. It may result in speech segments being determined as segments of the audio signals during breathing/ expiration time intervals and non-speech segments as segments of the audio signal during the inspiration time intervals.

Breathing includes a series of alternating inspirations (breathing in air to the lungs) and expirations/ exhalations (breathing out air from the lungs) and the speech processor 103 may be arranged to evaluate the breathing waveform signal to determine a timing property for the intervals in which the speaker is inspiring/ breathing in. Specifically, the speech processor 103 may be arranged to evaluate a timing of inspiration/ expiration intervals, and specifically when these intervals start and/or stop.

Such parameters may for example be determined by a peak picking algorithm that locates the local minima and maxima in the breathing waveform signal, which corresponds to the start of the inspiration/ inhalation and expiration/ exhalation phases.

In some approaches the audio signal may specifically be divided into speech segments and non-speech segments, and specifically with the speech segments corresponding to expiration intervals and non-speech segments corresponding to inspiration intervals. The speech processing may then be arranged to process the different speech segments differently. For example, in some embodiments, the attenuation may be increased for non-speech segments relative to speech segments, or speech recognition may only be performed during speech segments.

In the approach the breathing waveform signal represents a temporal respiratory pattern of a speaker (or multiple speakers) and this may be used to segment the speech according to breathing events such as inhaling or spoken and voiceless breathing. The speech processing is performed based on these segments reflecting the breathing events.

The approach may exploit the insight that speech typically is subconsciously performed such that it synchronizes the breathing to the grammatical organization of spoken language, for example, in the beginning of a new sentence or clause. Consequently, if the segmentation of speech audio is performed according to the breathing events, the segmented speech may be likely to represent the underlying intended grammatical structure of the speech content. Accordingly, adapting the speech processing to the breathing pattern may allow improved speech processing in many scenarios.

The audio apparatus is arranged to adapt the speech processing in response to the breathing waveform signal by adapting the segmentation of the audio signal into speech segments based on the breathing waveform signal. Thus, rather than merely perform a predetermined speech segmentation based on nominal or expected properties, the speech processing apparatus of FIG. 1 is arranged to adapt this speech segmentation to reflect the current breathing of the speaker.

The approach reflects the Inventor's realization that the breathing of a speaker impacts the speaking and that not only may it be possible to determine time varying properties resulting from the breathing but that these time varying properties can further be used to adapt the speech segmentation for speech processing of the same audio signal to provide improved performance, and in particular performance that may better adapt to different scenarios and user behavior.

The specific speech segmentation, processing and adaptation performed may depend on the individual embodiment. However, the approach may in many embodiments be used to adapt the operation to reflect the different breathing patterns that a person may exhibit e.g. due to performing different activities. For example, when a person is exercising, the breathing may become strained resulting in a very disrupted and slowed speech. The speech processing apparatus of FIG. 1 may automatically adapt to be optimized for slow speech with longer silent intervals.

The approach may provide substantially improved speech processing in many scenarios, and may for example in particular provide advantageous operation for speakers engaging in strenuous activities, such as exercising, or have breathing or speaker difficulties.

The speech processing circuit 103 is arranged to perform a segment based speech processing of the audio signal.

**In** some embodiments, the speech processor 103 may specifically be arranged to modify the speech processing for the inspiration time intervals. **In** particular, the speech processor 103 may in many embodiments be arranged to inhibit or stop the speech processing during inspiration time intervals. For example, speech processing in the form of speech recognition may simply ignore all the inspiration time intervals and only be applied to the expiration time intervals.

The speech processor 103 may be arranged to determine inspiration time segments of the audio signal. These time segments may thus reflect time intervals of the audio signal during which it is estimated that the speaker is breathing in, and they may accordingly be considered to be non-speech segments. The speech processor 103 may in some embodiments be arranged to attenuate the audio signal during the inspiration time segments. For example, a speech enhancement algorithm that is arranged to reduce noise by emphasizing the speech component of the audio signal may during the inspiration time intervals attenuate the audio signal including in many embodiments fully attenuate the signal.

Such approaches may tend to provide substantially improved performance and may allow the speech processing to adapt and specifically to be applied to parts of the audio signal where speech is present while allowing a different approach, and specifically attenuation, of parts of the audio signal where speech is unlikely to be present. The approaches may for example allow the breathing sound to be substantially reduced by eliminating heavy breathing sounds during the inspiration phase of the breathing wave signal. This may substantially improve the perceived speech clarity and may accordingly provide perceived speech. In some embodiments, at may allow for the part of the speech data that occurs during inspiration (estimated from the breathing wave) to be removed before the automatic speech recognition thereby facilitating this and reducing the risk of false detections of words. In a speech encoding embodiment, it may increase e.g. the coding efficiency as no speech encoding may be performed during the inspiration time intervals. For example, an indication of a silent or non-speech time interval may simply be inserted in the encoding data stream to indicate that no speech data is provided for this interval.

In many embodiments, the speech processing circuit 103 is specifically arranged to perform segment based speech enhancement processing.

In some embodiments, the speech processing may be a speech enhancement. Such a speech enhancement may for example be used to provide a clearer speech signal with e.g. other audio sources and noise in the audio signal being reduced. For example, as previously described, the audio signal may be attenuated during inspiration time segments. As another example, the breathing waveform signal may indicate transitions or phases in the breathing cycle which tend to be associated with specific sounds, and the speech processing may be arranged to generate corresponding signals and apply them in antiphase to provide an audio cancelling effect for such sounds. The segmentation may in such cases being so that the specific sounds are concentrated in specific speech segments.

As another example, the speech processing may for example include estimation of an acoustic model for speech and background (off-segment data) for noise reduction, de-reverberation, speech enhancement, echo cancellation, multi-microphone beamforming or other processing task aim at improving the speech quality or segmentation of multiple talers from one of multiple audio signals.

In more detail, in some embodiments, the segmented speech enhancement processing may be used for the separation and enhancement of the speech of an individual talker, for example, in a tele-conference or diarization application. Given a continuous speech recording, the determiner may estimate the breathing waveform signal and determine the corresponding local minima and maxima of it. Next, the continuous audio signal may be segmented into speech segments $s_i$ corresponding to the time-ranges between the *ith* maximum and the following minimum of the breathing waveform, and background/inspiration segments $b_i$ corresponding to time-ranges between the *ith* local minimum and the following local maximum. In some embodiments, it may be assumed that each speech segment $s_i$ contains the speech of one talker and the background segment represents static noise background. Based on this formulation, we may implement several examples of speech enhancement methods:

In a noise reduction application, the sequence of $b_i$ segments may be used to estimate a background noise spectrum model $W_n(\omega)$ which can be adaptively used to suppress the background noise in the incoming speech signal in $s_i$ segments, and in this way reduce the effect of background noise in the further processing and transmission of speech content.

In the case of close-talk microphone the breathing sounds may be disturbingly high. In one embodiment, the $b_i$ segments are suppressed in amplitude to reduce the effect of breathing sounds. In one embodiment this type of enhancement may be switched on based on the detection of high level breathing sounds in $b_i$ segments.

Adaptive beamforming in multi-microphone speech capture aims at estimating the parameters of a multi-channel signal processing model $A_k(\omega)$ to capture clean speech of a subject (or an angular directions) k around the multi-microphone device. We can use speaker identification algorithms to detect if two consecutive speech segments, $s_i$ and $s_{i+1}$ contain speech from the same, or different talkers. If it is determined that the two segments are from the same talker k, both segments are used to update the parameters of $A_k(\omega)$. This process can be performed in parallel to multiple subjects (or angular directions) $k$ to build a multi-beam speech capture algorithm. This method effectively uses the insight that the conversational turn-taking in a conversation often takes place at the time of inspiration, i.e., we wait for the end of the sentence and start talking when the other talker is inhaling.

The same principle of segmentation based on the extrema of the breathing waveform signal, combined with speaker identification in consecutive speech segments can also be used to control adaptation of the filter coefficients in Acoustic Echo Cancellation (AEC). In one embodiment, the parameters of the algorithm may be kept static when the detected identity of a talker in segments $s_i$ and $s_{i+1}$ is the same, and the filter may be adapted in case the talker has changed.

In many embodiments, the speech processing circuit 103 is specifically arranged to perform segment based speech recognition processing.

In automatic speech recognition, the speech may be segmented into processing frames where the individual words are recognized in the context of the neighboring utterances. The underlying segmentation problem has no unique solution but the recognized utterance having the largest likelihood score by the model is typically selected. However, it is well-known that a segmentation of the speech in a way that is different than the intended sentence uttered by the talker, often leads to gross errors in the recognized speech. The speech segmentation being based on considering the breathing waveform signal may provide a more accurate and appropriate segmentation in many scenarios and for many signals. In particular, it may in many cases allow the segmentation of speech at the input to the automatic speech recognition to follow the actual sentence and clause structure of the speech. This may allow the performance of automatic speech recognition for continuous speech to be significantly improved.

The impact on speech recognition processing of different sentence structures may as mentioned be very significant. As an example, the sentence structure may result in very different meanings such as for example indicated by the difference between the following text:

"Dear John:

I want a man who knows what love is all about. You are generous, kind, thoughtful. People who are not like you admit to being useless and inferior.
You have ruined me for other men. I yearn for you. I have no feelings whatsoever when we're apart. I can be forever happy-will you let me be yours?
Jane"

and the following text:

"Dear John,
I want a man who knows what love is. All about you are generous, kind, thoughtful people, who are not like you.
Admit to being useless and inferior. You have ruined me. For other men, I yearn. For you, I have no feelings whatsoever.
When we're apart, I can be forever happy. Will you let me be?
Yours,
Jane"

By applying a segmentation based on the breathing waveform signal it is possible for the segmentation to reflect the sentence structure thereby allowing a speech recognition algorithm to e.g. differentiate between the meanings in the examples above.

In particular for automated speech recognition, the approach may provide substantially improved performance by the process and segmentation being adapted to the current breathing pattern of the speaker.

For example, as previously mentioned, the speech processor 103 may be arranged to determine inspiration time segments of the audio signal corresponding to times when the speaker is breathing in and accordingly is not speaking. The speech processor 103 may then be arranged to exclude these the inspiration time segments from the speech recognition processing being applied to the audio signal. Thus, times for which the breathing waveform signal may indicate that speech is highly unlikely can be excluded from speech recognition thereby reducing the risk of erroneously detecting words when no speech is present. It may also improve accuracy detection for other times as it can be estimated when words may be spoken. In particular, it may allow the segmentation to follow sentence structures which may result in a substantially improved accuracy of the speech recognition.

The approach may be particularly advantageous for automatic speech recognition, e.g. providing a speech interface. For example, the speech interface of a personal assistant makes it possible to control media, navigation features, sport tracking, and various other information services during the exercise. However, typically the speech recognition is optimized, and possibly personalized, for normal speech at rest. During, and right after, a rigorous exercise, the need for oxygen is significantly increased resulting in a modified breathing which impacts the speech. Specifically, it may increase the breathing rate which may result in shorter speech intervals and sentences, and the speech recognition performed by the audio apparatus may reflect this.

In more detail, in some embodiments, the segmented speech recognition processing may be applied to select the utterance that matches best the determined breathing waveform signal. Automatic Speech Recognition (ASR) algorithms typically produce multiple candidate word sequences corresponding to the highest match with the input speech sequence. In conventional ASR systems the candidate sequences are rated based on the famous Viterbi algorithm. For the example above the ASR algorithm may produce several equally likely candidates such as

*"I yearn. For you, I have no feelings whatsoever! When we're apart?"*
*"I yearn for you! I have no feelings whatsoever when we 're apart.. "*
*"None for you I have, no feelings whatsoever. When we're apart. "*

When the timing of the breathing events is combined with the sequence of tokens from the ASR, we may compute a score for each sequence on how well it matches the respiratory pattern. In one embodiment, we may compute a score on how often a text symbol such as full stop, comma, exclamation mark, or question mark coincide with a minimum or maximum of a breathing waveform signal. The sequence which has the highest score, would be selected.

In many embodiments, the speech processing may be a speech encoding where captured speech e.g. is encoded for efficient transmission or distribution over a suitable communication channel. A more efficient encoding may typically be achieved simply by not encoding any signal during the non-speech segments and only encoding the audio signal during the speech segments. In some embodiments, the encoding during the speech segments may further be based on an assumption of the speech segment e.g. reflecting a complete sentence etc. For example, the speech processor may be arranged to encode the audio signal in a speech segment by processing each speech segment $s\_i$ as a separate coding entity such that a certain bit budget is assigned to each speech segment $s\_i$ and a smaller bit budget is allocated to background $b\_i$ segments.

In some embodiments, the speech processing circuit is arranged to select speech segments as comprising speech from a particular speaker (the one for which the breathing waveform signal is provided) rather than from another speaker. For example, the audio signal may include audio from a plurality of speakers, and the segmenter may be arranged to generate speech segments that may include speech from different speakers. For example, the segmenter may generate speech segments based only on the audio signal and without considering the breathing waveform signal. As an example, speech segments may be generated for times when the instantaneous level of the audio signal exceeds a threshold and non-speech/ silence segments may be generated when the instantaneous level is below the threshold. Thus, the segmenter may generate speech segments that reflect a high probability of speech but without considering the current speaker, i.e. without considering the identity of the active speaker.

The segmenter 107 may proceed to select speech segments for a given speaker based on the breathing waveform signal for the given speaker. As a low complexity example, the segmenter 107 may simply select speech segments during the expiration times determined from the breathing waveform signal. In some embodiments, the breathing waveform signal may reflect a different breathing pattern when a speaker is speaking rather than being silent, and the segmenter 107 may be arranged to identify such periods and select the speech segments thereof to be for the given speaker.

The audio apparatus may then use the specific (subset) of speech segments in a further speaker specific processing, such as for example adapting a beam shaping only based on such segments.

In multi-talker applications, such as multi-beam beamforming in speech capture or diarization of the talk of multiple conversation partners, the problem is the segmentation of the speech, and the identification of the active talker is a challenging problem. It is very difficult task to perform by conventional acoustic signal processing techniques. The talkers often barge-in, talk on top of each other, and they may have similar voices. However, in a multi-talker scenario it has been observed that humans are good at spotting the time when to take a turn. Often this is done at (or right before) the end of the sentence of the previous talker. Therefore, considering the breathing waveform signal of one or more speakers may allow detection of the different speakers taking turns to speak.

As a specific example, the audio apparatus may be configured so that the diarization is based on the $s_i$ segments and the changes of talk turns is determined by comparing consecutive speech segments using a machine learning model for speaker identification.

The audio apparatus(s) may specifically be implemented in one or more suitably programmed processors. For example, the artificial neural network of the determiner may be implemented in one or more such suitably programmed processors. The different functional blocks, and in particular the artificial neural network, may be implemented in separate processors and/or may e.g. be implemented in the same processor. An example of a suitable processor is provided in the following.

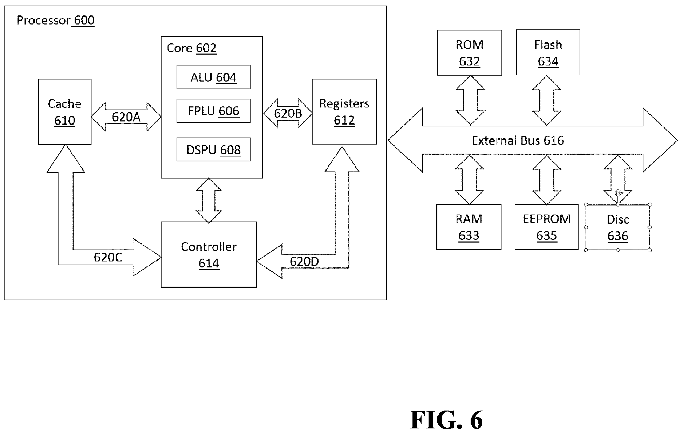

FIG. 6 is a block diagram illustrating an example processor 600 according to embodiments of the disclosure. Processor 600 may be used to implement one or more processors implementing an apparatus as previously described or elements thereof (including in particular one more artificial neural network). Processor 600 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 600 may include one or more cores 602. The core 602 may include one or more Arithmetic Logic Units (ALU) 604. In some embodiments, the core 602 may include a Floating Point Logic Unit (FPLU) 606 and/or a Digital Signal Processing Unit (DSPU) 608 in addition to or instead of the ALU 604.

The processor 600 may include one or more registers 612 communicatively coupled to the core 602. The registers 612 may be implemented using dedicated logic gate circuits (e.g., flip-flops) and/or any memory technology. In some embodiments the registers 612 may be implemented using static memory. The register may provide data, instructions and addresses to the core 602.

In some embodiments, processor 600 may include one or more levels of cache memory 610 communicatively coupled to the core 602. The cache memory 610 may provide computer-readable instructions to the core 602 for execution. The cache memory 610 may provide data for processing by the core 602. In some embodiments, the computer-readable instructions may have been provided to the cache memory 610 by a local memory, for example, local memory attached to the external bus 616. The cache memory 610 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 600 may include a controller 614, which may control input to the processor 600 from other processors and/or components included in a system and/or outputs from the processor 600 to other processors and/or components included in the system. Controller 614 may control the data paths in the ALU 604, FPLU 606 and/or DSPU 608. Controller 614 may be implemented as one or more state machines, data paths and/or dedicated control logic. The gates of controller 614 may be implemented as standalone gates, FPGA, ASIC or any other suitable technology.

The registers 612 and the cache 610 may communicate with controller 614 and core 602 via internal connections 620A, 620B, 620C and 620D. Internal connections may be implemented as a bus, multiplexer, crossbar switch, and/or any other suitable connection technology.

Inputs and outputs for the processor 600 may be provided via a bus 616, which may include one or more conductive lines. The bus 616 may be communicatively coupled to one or more components of processor 600, for example the controller 614, cache 610, and/or register 612. The bus 616 may be coupled to one or more components of the system.

The bus 616 may be coupled to one or more external memories. The external memories may include Read Only Memory (ROM) 632. ROM 632 may be a masked ROM, Electronically Programmable Read Only Memory (EPROM) or any other suitable technology. The external memory may include Random Access Memory (RAM) 633. RAM 633 may be a static RAM, battery backed up static RAM, Dynamic RAM (DRAM) or any other suitable technology. The external memory may include Electrically Erasable Programmable Read Only Memory (EEPROM) 635. The external memory may include Flash memory 634. The External memory may include a magnetic storage device such as disc 636. In some embodiments, the external memories may be included in a system.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example and shall not be construed as limiting the scope of the claims in any way.

**Claims**

1. An apparatus for speech processing of an audio signal, the apparatus comprising:

an input (101) arranged to receive the audio signal, the audio signal comprising a speech audio component for a speaker;
a determiner (105) arranged to generate a breathing waveform signal, the breathing waveform signal representing a lung air volume of the speaker as a function of time, the breathing waveform signal being independent of a level of the audio signal and representing a measure of a temporal respiratory pattern of the speaker throughout a breathing cycle;
a segmenter (107) arranged to segment the audio signal to generate speech segments of the audio signal, the segmentation being in response to the breathing waveform signal; and
a speech processing circuit (103) arranged to perform a speech processing of the audio signal, the speech processing being a segment based processing applied to the speech segments.

2. The apparatus of claim 1 wherein the determiner (105) is arranged to determine the breathing waveform signal from the audio signal.

3. The apparatus of claim 2 wherein the determiner (105) comprises a trained artificial neural network having input nodes for receiving samples of the audio signal and output nodes arranged to provide samples of the breathing waveform signal.

4. The apparatus of any previous claim wherein the determiner (105) is arranged to detect local maxima of the breathing waveform signal and to determine the speech segments in response to a timing of the local maxima.

5. The apparatus of any previous claim wherein the determiner (105) is arranged to detect local minima for the breathing waveform signal and to determine the speech segments in response to a timing of the local minima.

6. The apparatus of any previous claim wherein the determiner (105) is arranged to determine at least one speech segments as a segment of the audio signal between a time of a local maximum of the breathing waveform signal and a time of a local minimum of the breathing waveform signal.

7. The apparatus of any previous claim wherein the segmenter (107) is arranged to divide the audio signal into the speech segments and non-speech segments.

8. The apparatus of any previous claim wherein the segmenter (107) is arranged to determine breathing time intervals and inspiration time intervals from the breathing waveform signal; and to determine the speech segments as segments of the audio signals during breathing time intervals and non-speech segments as segments of the audio signal during the inspiration time intervals.

9. The apparatus of any previous claim wherein the speech processing circuit (103) is arranged to select speech segments as comprising speech from the speaker rather than from another speaker, the selection being in dependence on the breathing waveform signal.

10. The apparatus of any previous claim further comprising a sensor input (109) arranged to receive a chest sensor signal, and wherein the determiner (105) is arranged to determine the breathing waveform signal from the chest sensor signal.

11. The apparatus of any previous claim further comprising a video input (109) arranged to receive a video signal comprising video images of the speaker, and wherein the determiner (105) is arranged to determine the breathing waveform signal from the video images.

12. The apparatus of any previous claim wherein the speech processing comprises a speech enhancement processing.

13. The apparatus of any previous claim wherein the speech processing comprises a speech recognition processing.

14. A method of speech processing of an audio signal, the method comprising:

receiving the audio signal, the audio signal comprising a speech audio component for a speaker;

generating a breathing waveform signal, the breathing waveform signal representing a lung air volume of the speaker as a function of time, the breathing waveform signal being independent of a level of the audio signal and representing a measure of a temporal respiratory pattern of the speaker throughout a breathing cycle;

segmenting the audio signal to generate speech segments of the audio signal, the segmentation being in response to the breathing waveform signal; and

performing a speech processing of the audio signal, the speech processing being a segment based processing applied to the speech segments.

15. A computer program product comprising computer program code means adapted to perform all the steps of claim 14 when said program is run on a computer.

**Patentansprüche**

1. Einrichtung zur Sprachverarbeitung eines Audiosignals, wobei die Einrichtung Folgendes umfasst:

einen Eingang (101), der so angeordnet ist, dass er das Audiosignal empfängt, wobei das Audiosignal eine Sprachkomponente für einen Lautsprecher umfasst;

einen Bestimmer (105), der so angeordnet ist, dass er ein Atemwellenformsignal erzeugt, wobei das Atemwellenformsignal ein Lungenluftvolumen des Sprechers in Abhängigkeit von der Zeit darstellt, wobei das Atemwellenformsignal unabhängig von einem Pegel des Audiosignals ist und ein Maß eines zeitlichen Atemmusters des Sprechers während eines Atemzyklus darstellt;

einen Segmentierer (107), der so angeordnet ist, dass er das Audiosignal segmentiert, um Sprachsegmente des Audiosignals zu erzeugen, wobei die Segmentierung als Reaktion auf das Atemwellenformsignal erfolgt; und

eine Sprachverarbeitungsschaltung (103), die so angeordnet ist, dass sie eine Sprachverarbeitung des Audiosignals durchführt, wobei die Sprachverarbeitung eine segmentbasierte Verarbeitung ist, die auf die Sprachsegmente angewendet wird.

2. Einrichtung nach Anspruch 1, wobei der Bestimmer (105) so angeordnet ist, dass er das Atemwellenformsignal aus dem Audiosignal bestimmt.

3. Einrichtung nach Anspruch 2, wobei der Bestimmer (105) ein trainiertes künstliches neuronales Netz umfasst, das Eingangsknoten zum Empfangen von Abtastwerten des Audiosignals und Ausgangsknoten, die so angeordnet sind, dass sie Abtastwerte des Atemwellenformsignals bereitstellen, aufweist.

4. Einrichtung nach einem vorstehenden Anspruch, wobei der Bestimmer (105) so angeordnet ist, dass er lokale Maxima des Atemwellenformsignals erkennt und die Sprachsegmente in Abhängigkeit von einem Zeitpunkt der lokalen Maxima bestimmt.

5. Einrichtung nach einem vorstehenden Anspruch, wobei der Bestimmer (105) so angeordnet ist, dass er lokale Minima für das Atemwellenformsignal erkennt und die Sprachsegmente in Abhängigkeit von einem Zeitpunkt der lokalen Minima bestimmt.

6. Einrichtung nach einem vorstehenden Anspruch, wobei der Bestimmer (105) so angeordnet ist, dass er mindestens ein Sprachsegment als ein Segment des Audiosignals zwischen einem Zeitpunkt eines lokalen Maximums des Atemwellenformsignals und einem Zeitpunkt eines lokalen Minimums des Atemwellenformsignals bestimmt.

7. Einrichtung nach einem vorstehenden Anspruch, wobei der Segmentierer (107) so angeordnet ist, dass er das Audiosignal in die Sprachsegmente und Nicht-Sprachsegmente aufteilt.

8. Einrichtung nach einem vorstehenden Anspruch, wobei der Segmentierer (107) so angeordnet ist, dass er aus dem Atemwellenformsignal Atemzeitintervalle und Einatmungszeitintervalle bestimmt und die Sprachsegmente als Segmente des Audiosignals während der Atemzeitintervalle und die Nicht-Sprachsegmente als Segmente des Audiosignals während der Einatmungszeitintervalle bestimmt.

9. Einrichtung nach einem vorstehenden Anspruch, wobei die Sprachverarbeitungsschaltung (103) so angeordnet ist, dass sie Sprachsegmente auswählt, die Sprache von dem Sprecher anstatt von einem anderen Sprecher umfassen, wobei die Auswahl in Abhängigkeit vom Atemwellenformsignal erfolgt.

10. Einrichtung nach einem vorstehenden Anspruch, weiter umfassend einen Sensoreingang (109), der so angeordnet ist, dass er ein Brustsensorsignal empfängt, und wobei der Bestimmer (105) so angeordnet ist, dass er aus dem Brustsensorsignal das Atemwellenformsignal bestimmt.

11. Einrichtung nach einem vorstehenden Anspruch, weiter umfassend einen Videoeingang (109), der so angeordnet ist, dass er ein Videosignal empfängt, das Videobilder des Sprechers umfasst, und wobei der Bestimmer (105) so angeordnet ist, dass er das Atemwellenformsignal aus den Videobildern bestimmt.

12. Einrichtung nach einem vorstehenden Anspruch, wobei die Sprachverarbeitung eine Sprachverbesserungsverarbeitung umfasst.

13. Einrichtung nach einem vorstehenden Anspruch, wobei die Sprachverarbeitung eine Spracherkennungsverarbeitung umfasst.

14. Verfahren zur Sprachverarbeitung eines Audiosignals, wobei das Verfahren Folgendes umfasst:

Empfangen des Audiosignals, wobei das Audiosignal eine Sprachkomponente für einen Lautsprecher umfasst;
Erzeugen eines Atemwellenformsignals, wobei das Atemwellenformsignal ein Lungenluftvolumen des Sprechers in Abhängigkeit von der Zeit darstellt, wobei das Atemwellenformsignal unabhängig vom Pegel des Audiosignals ist und ein Maß eines zeitlichen Atemmusters des Sprechers während eines Atemzyklus darstellt;
Segmentieren des Audiosignals zum Erzeugen von Sprachsegmenten des Audiosignals, wobei die Segmentierung als Reaktion auf das Atemwellenformsignal erfolgt; und
Durchführen einer Sprachverarbeitung des Audiosignals, wobei die Sprachverarbeitung eine segmentbasierte Verarbeitung ist, die auf die Sprachsegmente angewendet wird.

15. Computerprogrammprodukt, umfassend Computerprogrammcodemittel, die angepasst sind, um alle Schritte von Anspruch 14 durchzuführen, wenn das Programm auf einem Computer ausgeführt wird.

## Revendications

1. Appareil de traitement de la parole à partir d'un signal audio, l'appareil comprenant :

une entrée (101) conçue pour recevoir le signal audio, le signal audio comprenant une composante audio vocale pour un haut-parleur;
un déterminant (105) agencé pour générer un signal de forme d'onde respiratoire, le signal de forme d'onde respiratoire représentant un volume d'air pulmonaire du locuteur en fonction du temps, le signal de forme d'onde respiratoire étant indépendant d'un niveau du signal audio et représentant une mesure d'un modèle respiratoire temporel du locuteur tout au long d'un cycle respiratoire ;
un segmentateur (107) conçu pour segmenter le signal audio afin de générer des segments de parole à partir de ce signal, la segmentation étant effectuée en réponse au signal de forme d'onde respiratoire ; et
un circuit de traitement de la parole (103) conçu pour effectuer un traitement de la parole du signal audio, le traitement de la parole étant un traitement basé sur des segments appliqué aux segments de parole.

2. Appareil selon la revendication 1 dans lequel le déterminant (105) est agencé pour déterminer le signal de forme d'onde respiratoire à partir du signal audio.

3. Appareil selon la revendication 2 dans lequel le déterminant (105) comprend un réseau neuronal artificiel entraîné doté de nœuds d'entrée pour recevoir des échantillons du signal audio et de nœuds de sortie disposés pour fournir des échantillons du signal de forme d'onde respiratoire.

4. Appareil selon une quelconque revendication précédente, dans lequel le déterminant (105) est agencé pour détecter les maxima locaux du signal de forme d'onde respiratoire et pour déterminer les segments de parole en réponse à une synchronisation des maxima locaux.

5. Appareil selon une quelconque revendication précédente, dans lequel le déterminant (105) est agencé pour détecter les minima locaux du signal de forme d'onde respiratoire et pour déterminer les segments de parole en réponse à une synchronisation des minima locaux.

6.  Appareil selon une quelconque revendication précédente, dans lequel le déterminant (105) est agencé pour déterminer au moins un segment de parole comme un segment du signal audio entre un moment de maximum local du signal de forme d'onde respiratoire et un moment de minimum local du signal de forme d'onde respiratoire.

7.  Appareil selon une quelconque revendication précédente, dans lequel le segmentateur (107) est agencé pour diviser le signal audio en segments de parole et en segments non verbaux.

8.  Appareil selon une quelconque revendication précédente, dans lequel le segmentateur (107) est agencé pour déterminer les intervalles de temps de respiration et les intervalles de temps d'inspiration à partir du signal de forme d'onde respiratoire ; et pour déterminer les segments de parole comme des segments des signaux audio pendant les intervalles de temps de respiration et les segments non verbaux comme des segments du signal audio pendant les intervalles de temps d'inspiration.

9.  Appareil selon une quelconque revendicatios précédente, dans lequel le circuit de traitement de la parole (103) est agencé pour sélectionner des segments de parole comme comprenant la parole du locuteur plutôt que celle d'un autre locuteur, la sélection étant en fonction du signal de forme d'onde respiratoire.

10. Appareil selon une quelconque revendication précédente comprenant en outre une entrée de capteur (109) disposée pour recevoir un signal de capteur thoracique, et dans lequel le déterminant (105) est disposé pour déterminer le signal de forme d'onde respiratoire à partir du signal du capteur thoracique.

11. Appareil selon une quelconque revendication précédente, comprenant en outre une entrée vidéo (109) conçue pour recevoir un signal vidéo comprenant des images vidéo du locuteur, et dans lequel le déterminant (105) est conçu pour déterminer le signal de forme d'onde respiratoire à partir des images vidéo.

12. Appareil selon une quelconque revendication précédente, dans lequel le traitement de la parole comprend un traitement d'amélioration de la parole.

13. Appareil selon une quelconque revendication précédente, dans lequel le traitement de la parole comprend un traitement de reconnaissance vocale.

14. Procédé de traitement de la parole d'un signal audio, le procédé comprenant :

    la réception du signal audio, le signal audio comprenant une composante audio vocale pour un locuteur ;
    la génération d'un signal de forme d'onde respiratoire, le signal de forme d'onde respiratoire représentant un volume d'air pulmonaire du locuteur en fonction du temps, le signal de forme d'onde respiratoire étant indépendant du niveau du signal audio et représentant une mesure d'un modèle respiratoire temporel du locuteur tout au long d'un cycle respiratoire ;
    la segmentation du signal audio pour générer des segments de parole, la segmentation étant effectuée en réponse au signal de forme d'onde respiratoire ; et
    la réalisation d'un traitement de la parole du signal audio, le traitement de la parole étant un traitement segmenté appliqué aux segments de parole.

15. Produit de programme informatique comprenant des moyens de code de programme informatique adaptés pour réaliser toutes les étapes de la revendication 14 lorsque ledit programme est exécuté sur un ordinateur.

FIG. 1

FIG. 2

$$l = \max\left(0, \sum_n w_n x_n\right)$$

**FIG. 3**

**FIG. 4**

**FIG. 5**

Processor 600

Core 602

ALU 604

FPLU 606

DSPU 608

Cache
610

620A

620B

Registers
612

Controller
614

620C

620D

ROM
632

Flash
634

External Bus 616

RAM
633

EEPROM
635

Disc
636

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090098981 A1
- US 9301710 B2

**Non-patent literature cited in the description**

- **FUKUDA et al.** Breath-detection-based telephony speech phrasing. *Proc. Interspeech*, 2011, 2625-2628
- **MOSTAANI et al.** On The Relationship Between Speech-Based Breathing Signal Prediction Evaluation Measures and Breathing Parameters Estimation. *Proc. IEEE ICASSP*, 2021, 1345-1349
- **XAVIER GLOROT ; ANTOINE BORDES ; YOSHUA BENGIO**. Proceedings of the Fourteenth International Conference on Artificial Intelligence and Statistics. *PMLR*, 2011, vol. 15, 315-323
- **HOCHREITER, SEPP ; JÜRGEN SCHMIDHUBER.** Long short-term memory.. *Neural computation*, 1997, vol. 9 (8), 1735-1780